# EUROPÄISCHE PATENTSCHRIFT

(11) **EP 2 695 551 B1**
(45) Veröffentlichungstag und Bekanntmachung des Hinweises auf die Patenterteilung: **22.11.2017**
(21) Anmeldenummer: 13179982.7
(22) Anmeldetag: 09.08.2013
(51) Int. Cl.: A47J 27/00, A47J 37/12

(54) **Gargerät**
Cooking device
Appareil de cuisson

(30) Priorität: 10.08.2012 DE 102012015912
(43) Veröffentlichungstag der Anmeldung: 12.02.2014
(73) Patentinhaber: FRIMA-T SAS, 68270 Wittenheim (FR); FRIMA International AG, 9435 Heerbrugg (CH)
(72) Erfinder: Waßmus, Reinhard, 79395 Neuenburg am Rhein (DE); Lingenheil, Markus, 79206 Breisach/Oberrimsingen (DE)
(74) Vertreter: Prinz & Partner mbB

(56) Entgegenhaltungen:
- DE-A1- 3 525 845
- DE-U1- 20 310 602

## Beschreibung

Die Erfindung betrifft ein Gargerät zum Zubereiten von Speisen gemäß dem Oberbegriff des Anspruchs 1.

Gargeräte mit Tiegel sind äußerst universell einsetzbar. Mit ihnen ist es möglich, im Tiegel zu braten, zu kochen, zu frittieren, aufzuwärmen und dergleichen. Die bisherigen Gargeräte mit Garbehältern, wie Tiegel, sind fest mit einem tragenden Gestell verbunden, das entweder bis zum Boden reicht und oftmals durch Rollen verfahrbar ist, oder an einer Wand aufgehängt werden kann. Das hauptsächlich aus Rohren gebildete Gestell ist meist mit einer Blechverkleidung, die das Gehäuse bildet, versehen. Der Tiegel kippt mit dem vorderen Rand zum Entleeren zum Beispiel bei flüssigen Speisen um etwa 60° bis 90° nach unten, um die Speisen aus dem Tiegel in einen Behälter zu überführen.

In der DE 35 25 845 A1 ist ein Gargerät mit einem zwischen zwei seitlichen Gestellteilen schwenkbar platziertem Tiegel gezeigt.

Die DE 203 10 602 U1 zeigt ein Gargerät mit einem säulenartigen Gestell, das zum Aufstellen des Gargeräts dient, wobei an entgegengesetzten Seiten des Gestells jeweils ein Tiegel über eine seitlich vom Gestell abstehende Schwenkachse befestigt ist.

Die Erfindung hat es sich zum Ziel gesetzt, ein Gargerät in Form eines Tisch-Gargeräts auszubilden, das im Wesentlichen sämtliche Funktionen der bisherigen Großgeräte mit Bodengestell aufweist.

Eine Aufgabe der Erfindung besteht darin, ein Tisch-Gargerät zu schaffen, das kompakt ausgebildet ist und einen ausreichend schwenkbaren Tiegel aufweist.

Dies wird bei einem Gargerät der eingangs genannten Art durch die Merkmale des Anspruchs 1 erreicht.

Der einem Tiegel zugeordnete Gestellabschnitt ist in einer erfindungsgemäßen Variante in Draufsicht L-förmig und verläuft längs des hinteren und eines der beiden seitlichen Ränder. Zwischen dem "L" ist der Tiegel angeordnet. Das seitliche Bauvolumen wird durch das fehlende Gestell an einer Längsseite des Tiegels zusätzlich reduziert.

Das erfindungsgemäße Gargerät kann zwar mit einem einzelnen Tiegel ausgestattet sein, in einer zweiten erfindungsgemäßen Variante sind jedoch zwei Tiegel nebeneinander angeordnet. Das Auf-Tisch-Gestell ist ein gemeinsames Auf-Tisch-Gestell und ist in Draufsicht T-förmig ausgebildet. Zwischen den Tiegeln verläuft ein Mittelsteg des Gestells. Ein Quersteg des "T" erstreckt sich längs der hinteren Ränder der beiden Tiegel. Beide Tiegel haben also an ihren jeweiligen äußeren Seitenrändern kein Gestell, sondern nur jeweils an dem dem anderen Tiegel zugewandten Seitenrand.

Ein Auf-Tisch-Gestell im Sinne der Erfindung ist lediglich so hoch, dass das gesamte Gargerät insgesamt eine maximale Höhe vom Fuß des Gestells bis zur Oberkante, die durch den Deckel oder durch das gegebenenfalls über den Deckel überstehende Gestell gebildet sein kann, von 400 mm, insbesondere von maximal nur 350 mm aufweist. Um die Tiefe des Gargeräts zu reduzieren und um gleichzeitig den Tiegel möglichst weit nach vorne zu platzieren, hat das erfindungsgemäße Auf-Tisch-Gargerät ein Auf-Tisch-Gestell, das eine komplette Lücke im Bereich des vorderen Randes, das heißt der Vorderseite des Tiegels besitzt. Mit anderen Worten, im Bereich des vorderen Randes, das heißt vor dem Tiegel oder unter dem Tiegel im Bereich des vorderen Randes ist kein Gestell vorhanden.

Der Raum zwischen dem unteren Ende des vorderen Randes und dem Tisch ist damit leer, so dass der Tiegel in diesen Raum hineinschwenken kann.

Das Gestell ist das tragende Teil des Gargeräts, welches das Gewicht des oder der Tiegel bis in den Fixiergrund, also den Boden, eine Wand oder, bei einem Auf-Tisch-Gerät, in den Tisch einleitet, wobei in diesem Fall natürlich auch Füße oder einstellbare Füße vorgesehen sein können.

Das Gestell kann durch zusammengesetzte Hohlkörper gebildet sein, beispielsweise durch vorgefertigte, miteinander verschweißte Rohre oder gekantete und miteinander verbundene, z.B. verschweißte Blechteile.

Die bevorzugte Ausführungsform sieht vor, dass das Gerät sogar an einem zum vorderen Rand angrenzenden seitlichen Rand, das heißt an einer Tiegel-Längsseite, zumindest im Übergangsbereich zum vorderen Rand ebenfalls gestellfrei ausgeführt ist, sodass zumindest der gesamte Eckbereich frei ist.

Wichtig ist natürlich, dass der Schwerpunkt des ganzen Gargeräts immer innerhalb des Mehrecks liegt, das durch die Kontaktstellen des Gestells mit dem Tisch, auf dem es steht, umschrieben ist. Dann kann das Gargerät unabhängig von seinem Befüllgrad und vom Schwenkwinkel des Tiegels nicht kippen.

Insbesondere ist auch längs des gesamten seitlichen Randes des Tiegels kein Auftischgestell vorhanden. Das heißt, auch hier ist der Raum zwischen dem Tisch und dem unteren Ende des seitlichen Randes leer. Damit wird einerseits die Zugänglichkeit zum Tiegel verbessert, und andererseits wird zusätzlich der Schwenkwinkel für den Tiegel und dessen Volumen, bei minimaler Breite des Gargeräts, maximiert, denn auch seitlich ist kein Gestell unterhalb oder neben dem Tiegel vorhanden, was aber nur für eine der beiden Seitenflächen der Fall ist.

Das erfindungsgemäße Tisch-Gargerät ist in sich standfest, unabhängig vom Beladungszustand.

Wenn der Mittelsteg gegenüber der Oberseite der geschlossenen Deckel nach oben vorsteht, kann er zusätzlich auch als Spritzschutz zumindest in eingeschränktem Umfang dienen, womit verhindert wird, dass Speisen von einem Tiegel in den benachbarten Tiegel spritzen können.

Im Auf-Tisch-Gestell sind wenigstens einige der elektrischen Bauteile untergebracht. Die elektronischen Bauteile sind beispielsweise Leiterplatten, die im Gestell selbst platzsparend und sicher untergebracht werden können. Elektrische Bauteile wie Schütze oder Trafos, die ein großes Volumen und Gewicht aufweisen, sind ebenfalls im Gestell unterbringbar. Elektronische Bauteile sind eine Untergruppe von elektrischen Bauteilen.

Die elektrischen Bauteile wie Schütze und Trafos sollten im Quersteg untergebracht sein, denn ihr Gewicht sorgt dafür, dass der Gesamtschwerpunkt des Gargeräts nach hinten und durch die Verteilung nach links bzw. rechts in eine stabile Mitte wandert.

Eine weitere bevorzugte Ausführungsform in diesem Zusammenhang sieht vor, dass im Mittelsteg elektrische Bauteile und/oder flüssigkeitsführende Bauteile untergebracht sind. Sind sowohl elektrische Bauteile als auch flüssigkeitsführende Bauteile vorhanden, sollte eine Trennwand zwischen den Räumen innerhalb des Mittelstegs, in denen elektrische Bauteile untergebracht sind, und Räumen, in denen flüssigkeitsführende Bauteile untergebracht sind, vorhanden sein. Damit ist auch rein räumlich Strom von Wasser getrennt.

Natürlich lässt sich diese Ausführungsform, die auf die Unterbringung der elektrischen Bauteile gerichtet ist, auch bei den zuvor erwähnten Ausführungsformen anwenden und mit ihnen kombinieren.

Im Mittelsteg kann eine frei auskragende Schwenkachse für den zugeordneten Tiegel gelagert sein. Insbesondere bildet die Schwenkachse in ihrem Inneren einen von einem Tiegelboden ausgehenden Ablaufkanal, der längs des Mittelstegs in Richtung zum Quersteg verläuft. Für diese Ausführungsform ist es unnötig, am vorderen Ende des Tiegelbodens bzw. am unteren Ende der vorderen Tiegelwand einen nach unten abstehenden Ablaufhahn oder dergleichen vorzusehen, der sich erneut negativ auf den Schwenkwinkel auswirken würde. Vielmehr kann der Tiegelinhalt, zum Beispiel Wasser oder Reinigungsflüssigkeit mit Wasser, über die Schwenkachse entleert werden. Die Schwenkachse kann in diesem Zusammenhang entweder feststehend sein oder auch in Form eines Doppelrohres ausgeführt sein, wobei das innenstehende Rohr fest ist und das außenstehende Rohr den schwenkbaren Teil des Lagers bildet. Zwischen Innen- und Außenrohr ist dann ein Ringspalt vorhanden, der als Ablaufkanal dient.

Beim erfindungsgemäßen Gargerät verläuft der längs des hinteren Randes verlaufende Abschnitt des Auf-Tisch-Gestells unterhalb des hinteren Randes des Tiegels. Das bedeutet, das Gestell verläuft, in Draufsicht gesehen, nicht angrenzend an den hinteren Rand des Tiegels, sondern zumindest teilweise, vorzugsweise vollständig unterhalb des Tiegels, wodurch die Bautiefe des Gargeräts bei großem Tiegelvolumen gering gehalten werden kann.

Wenn das Gestell durch ein feststehendes, selbsttragendes Gehäuse des Gargeräts gebildet wird, ist darüber hinaus keine weitere Verkleidung (Einhausung) mehr notwendig. Damit verschmelzen sozusagen Verkleidung und Gestell ineinander, was für eine Minimierung der Bauteile sorgt. Darüber hinaus ist damit die Verkleidung insgesamt sehr stabil und robust, denn sie wird durch das Gestell gebildet. Temperaturbeständige, kratzfeste großvolumige aufgesetzte zusätzliche Verkleidungsschalen und dergleichen können damit zumindest teilweiseüberflüssig werden.

Das erfindungsgemäße Gargerät kann im Bereich der Rückseite des Auf-Tisch-Gestells mit einer in Richtung Vorderseite eingezogenen Anschlussnische ausgestattet sein, in der zumindest ein Wasser- und/oder wenigstens ein Elektroanschluss endet. Unter "Wasseranschluss" fällt sowohl ein Frischwasseranschluss als auch ein Abwasseranschluss. Durch die Anschlussnische stehen die zwangsläufig notwendigen Kupplungsstücke an den Enden der Wasserschläuche oder Elektrokabel nicht mehr gegenüber dem Gargerät nach hinten gegenüber der Rückseite des Geräts vor. Auch werden die Schlauch- und Elektroanschlüsse nicht mehr permanent mechanisch belastet, weil ansonsten sie das am weitesten nach hinten vorstehende Teil des angeschlossenen Gargeräts bilden und oftmals permanent gegen die angrenzende Wand gedrückt werden.

Im nicht verschwenkten Zustand sollte der Tiegel im Bereich seines hinteren Randes auf dem Auf-Tisch-Gestell aufliegen, sodass dieses eine Art Anschlag bildet. Durch das Aufliegen längs des Randes erhöht sich darüber hinaus auch die Stabilität des Geräts und vor allem des Tiegels beim Garen.

Deckel und/oder Tiegel sollten mechanisch und/oder motorisch angetrieben schwenkbar sein. Es kann aber auch zusätzlich eine die Schwenkbewegung unterstützende Gasdruck- oder mechanische Feder vorhanden sein, um die notwendigen motorischen Kräfte zu reduzieren.

Das erfindungsgemäße Gargerät ist darüber hinaus gemäß einer Ausführungsform mit einer ausziehbaren Handbrause versehen, die mit einem Schlaufen- oder Wickelmechanismus, vorzugsweise mit einem Aufrollmechanismus für den Schlauch ausgestattet ist. Der Aufrollmechanismus samt des Schlauchs ist im Auf-Tisch-Gestell untergebracht. Im eingezogenen Zustand der Handbrause sind deren Brausekopf, der außerhalb des Auf-Tisch-Geräts greifbar für den Benutzer liegt, und der Schlauch so gelagert, dass der durch Brausekopf und Schlauch definierte Kanal vom Auslass im Brausekopf bis zum Erreichen des Aufrollmechanismus schräg aufwärts verläuft. Dadurch wird verhindert, dass eventuelle Speisereste im Bereich des Brausekopfes zum Kontaminieren des im Schlauch stehenden Wassers führen. Bei der Erfindung verläuft der Schlauch zum Auslass im Brausekopf abwärts. Auch diese Idee kann mit den zuvor genannten Ideen kombiniert werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf eine erste Ausführungsform des erfindungsgemäßen Gargeräts,
- Figur 2 das Gargerät von Figur 1 mit hochgeschwenkten Deckeln und einem gekippten Tiegel,
- Figur 3 eine perspektivische Draufsicht auf eine zweite Ausführungsform des erfindungsgemäßen Gargeräts,
- Figur 4 eine perspektivische Seitenansicht des Gargeräts nach Figur 3 mit hochgeschwenkten Deckeln und einem gekippten Tiegel,
- Figur 5 eine perspektivische Ansicht einer dritten Ausführungsform des erfindungsgemäßen Gargeräts, bei dem ein Deckel zur Verbesserung der Übersichtlichkeit weggelassen ist,
- Figur 6 eine Rückansicht des Gargeräts nach Figur 3 mit aufgeschnittener Rückwand,
- Figur 7 eine Längsschnittansicht durch das Gargerät nach Figur 3 längs des Mittelstegs, und
- Figur 8 eine Frontansicht des Mittelstegs eines erfindungsgemäßen Gargeräts.

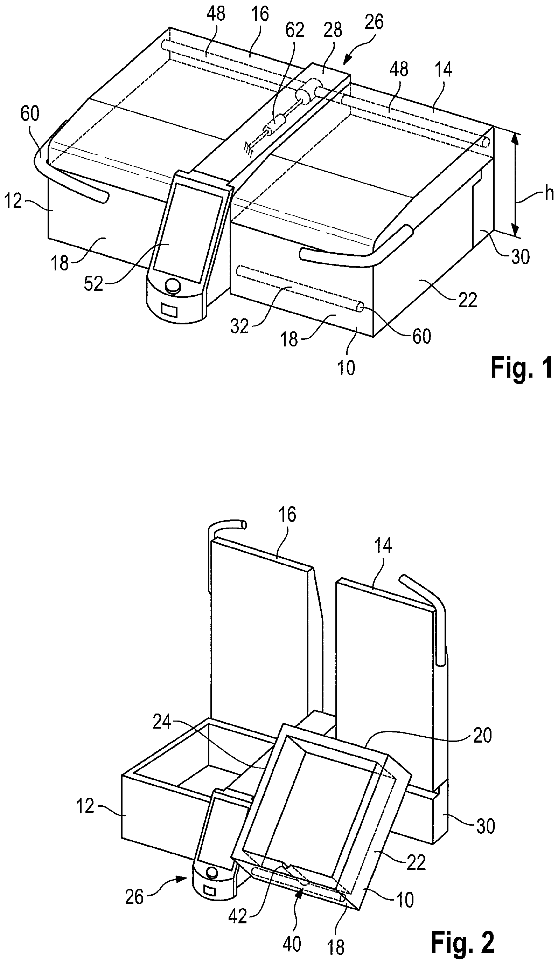

In Figur 1 ist ein Gargerät zum Zubereiten von Speisen dargestellt, welches als Tischgerät ausgeführt ist. Das bedeutet, die maximale Höhe h des Gargeräts, gemessen von der Oberfläche des Tisches, auf dem es aufgesetzt ist, beträgt 400 mm, insbesondere nur maximal 350 mm, bezogen auf den geschlossenen Zustand des Geräts.

Das Gargerät umfasst zwei Tiegel 10, 12, die nach oben offene, innenseitig einstückige Behälter darstellen (siehe Figur 2). Die Tiegel 10, 12 können durch vorzugsweise schwenkbare Deckel 14, 16 geöffnet oder geschlossen werden.

Auf der Unterseite jedes Tiegels 10, 12 sind nicht gezeigte Heizelemente vorgesehen, über die der Tiegelboden elektrisch beheizt werden kann, um in den Tiegel 10, 12 eingebrachte Speisen zu garen oder auch Wasser zu kochen. Die Tiegel sind als Quader ausgebildet.

Jeder Tiegel 10, 12 hat einen Boden, einen vorderen Rand 18 (Vorderseite), einen entgegengesetzten hinteren Rand 20 (Hinterseite) sowie einen ersten Seitenrand 22 und einen entgegengesetzten Seitenrand 24 (Seiten). Die Seitenränder 24 der beiden Tiegel 10, 12 sind einander zugewandt.

Tiegel 10, 12 und Deckel 14, 16 sind an einem Auf-Tisch-Gestell 26 schwenkbar angebracht, welches vorzugsweise gleichzeitig als Gehäuse des Gargeräts ausgeführt ist.

Das Auf-Tisch-Gestell 26 ist in Draufsicht auf das Gargerät T-förmig ausgebildet, mit einem zwischen den benachbarten Tiegeln 10, 12 und den Deckeln 14, 16 verlaufenden Mittelsteg 28 sowie einem mit dem Mittelsteg 28 verbundenen Quersteg 30. Der Quersteg 30 erstreckt sich längs der hinteren Ränder 20 beider Tiegel 10, 12 sozusagen von der linken Außenseite des Gargeräts bis zur entgegengesetzten rechten Außenseite des Gargeräts.

Mittelsteg 28 und Quersteg 30 sind als ineinander übergehende Hohlkörper ausgebildet.

Zumindest der Quersteg 30 des T ist so ausgeführt, dass das Gestell gleichzeitig das dadurch selbsttragende Außengehäuse bildet. Dies gilt im übrigen für alle Ausführungsformen.

Der Mittelsteg 28 kann auch entsprechend ausgeführt sein oder das Gestell kann hier noch einmal verkleidet werden, da das Gestell in diesem Abschnitt großvolumige Einbauteile enthält, die große Einbauöffnungen im Gestell zur Montage erfordern.

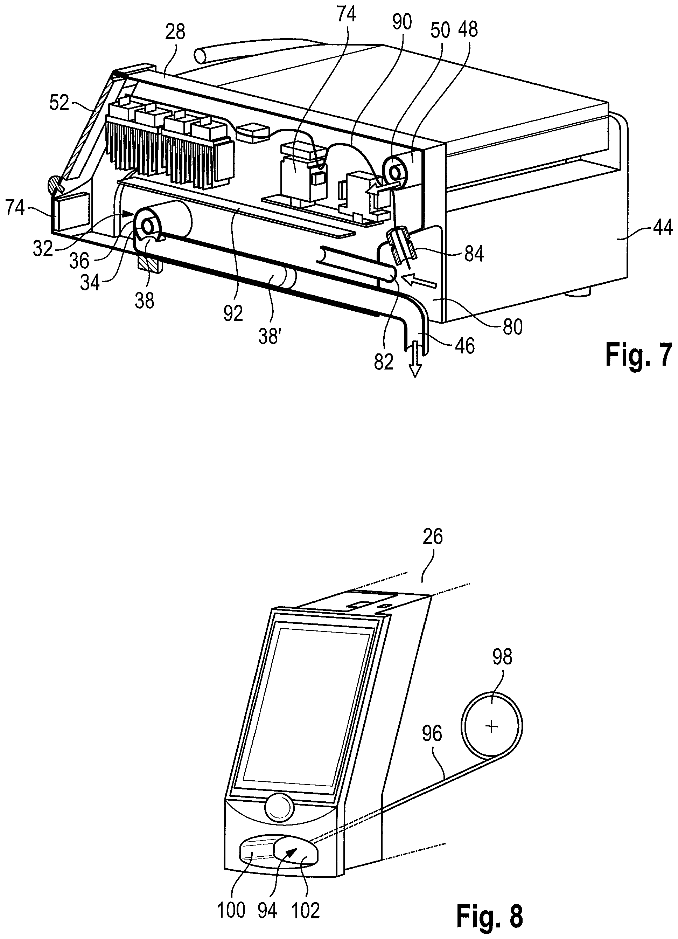

Die beiden Tiegel 10, 12 sind, wie in Figur 2 zu sehen ist, schwenkbar am Gestell, genauer gesagt am Mittelsteg 28 gelagert, indem vom Mittelsteg 28 von gegenüberliegenden Seiten Schwenkachsen 32 (siehe Figuren 1 und 7) in den Boden des Tiegels ragen. Die Schwenkachsen 32 dienen gleichzeitig als Abwasserkanal und haben eine feststehende mittige Lagerachse 34 sowie eine die Lagerachse umgebende Drehachse 36, wobei Lager- und Drehachse 34 bzw. 36 als Rohre ausgeführt sind. Zwischen der Lagerachse 34 und der Drehachse 36 ergibt sich ein Ringspalt 38, der als Ablaufkanal ausgeführt ist.

Die Schwenkachse 32 ist sehr nahe am vorderen Rand 10 angeordnet und liegt relativ weit unten nahe dem Tiegelboden. Jeder Tiegel 10, 12 hat im Bereich seines Tiegelbodens oder des unteren Endes der vorderen Tiegelwand, und zwar im vorderen mittigen Bereich einen wahlweise verschließbaren Auslass 40 (siehe Figur 2), der in geöffnetem Zustand mit dem Ablaufkanal 38 in Strömungsverbindung steht.

Im Bereich des Auslasses 40 ist die Innenseite der vorderen Wand jedes Tiegels 10, 12 mit einer Ausgießrinne 42 versehen, die ein komplettes Ausgießen des Tiegelinhalts bei komplett hochgekipptem Tiegel 10, 12 ermöglicht.

Zwischen Lagerachse 34 und Drehachse 36 sind an einigen Stellen natürlich Lager vorgesehen, sodass sich die Drehachse 36 um die Lagerachse 34 drehen kann.

Die Drehachse 36 hat im Bereich des Mittelstegs 28 (siehe Figur 7) einen Auslass, der mit einem weiteren Abschnitt des Auslasskanals 38' in Verbindung steht, welcher sich entlang des Bodens des Mittelstegs 28 bis zur Rückseite 44 des Gargeräts erstreckt und über einen L-förmigen Ablaufstutzen 46 nach unten endet. An den Ablaufstutzen 46 ist von der Unterseite aus ein Ablaufschlauch anzukoppeln.

Auch die Deckel 14, 16 sind schwenkbar am Auf-Tisch-Gestell 26 gelagert, und zwar (siehe Figur 2) über Schwenkachsen 48, die vom Mittelsteg 28 ausgehen und bei dieser Ausführungsform frei im jeweiligen Deckel 14, 16 enden.

Die Schwenkachse 48, die auch in Figur 7 zu sehen ist, kann optional auch als Zulauf für Frischwasser ausgeführt sein, indem auch hier zwischen einem beispielsweise feststehenden und einem schwenkbaren Teil ein Zulaufkanal 50 entsteht.

Das Gargerät baut extrem kompakt, hat dennoch sehr große Tiegel und ist auf einem normalen Tisch in einer Profiküche unterbringbar, ohne über den Tisch seitlich oder nach vorne vorzustehen. Die Tiefe des Gargeräts beträgt vorzugsweise weniger als 850 mm. Abhängig von der Ausführung und Positionierung des Bedienerdisplays 52, welches in Figur 1 nach vorne absteht, können Tiefen von unter 800 mm realisiert werden.

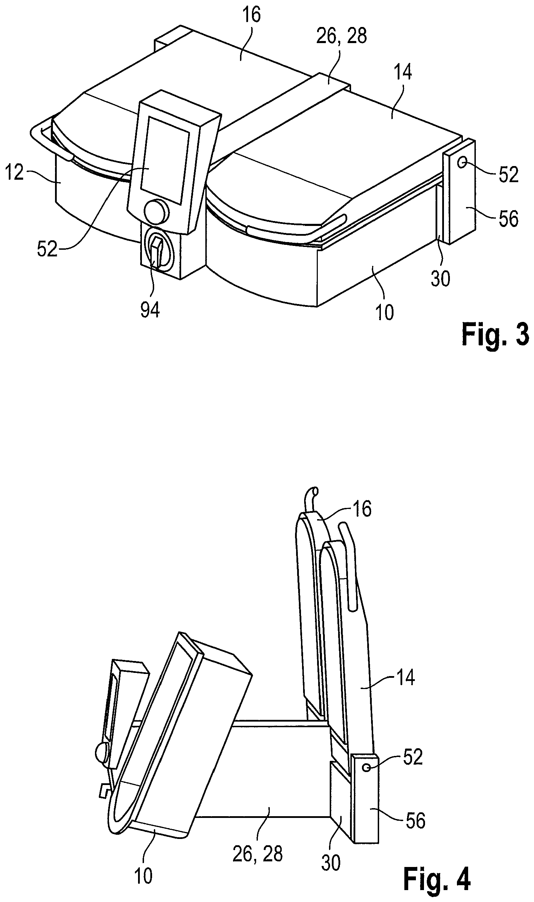

Das große Tiegelvolumen kombiniert mit Kompaktheit und einem großen Kippwinkel der Tiegel 10, 12 von bis zu 60° oder auch mehr wird vor allem durch die besondere Ausführungsform des Auf-Tisch-Gestells 26 erreicht. Das Auf-Tisch-Gestell 26 mit seiner T-Form umrahmt jeden Tiegel 10, 12 nämlich nur in Draufsicht L-förmig und verläuft nur längs des hinteren Randes 20 und eines seitlichen Randes 24. Am vorderen Rand 18 sowie bei der gezeigten Ausführungsform sogar längs des gesamten seitlichen Randes 22 ist das Auf-Tisch-Gestell gestellfrei ausgeführt, das heißt, es ist kein tragender Abschnitt des Gestells an der Außenseite und der Vorderseite jedes Tiegels vorhanden. Damit kann, wie in Figur 2 und für eine andere Ausführungsform in Figur 4 gut zu erkennen ist, der Tiegel komplett geschwenkt werden und sich bis zum unteren Ende des Gargerätes erstrecken.

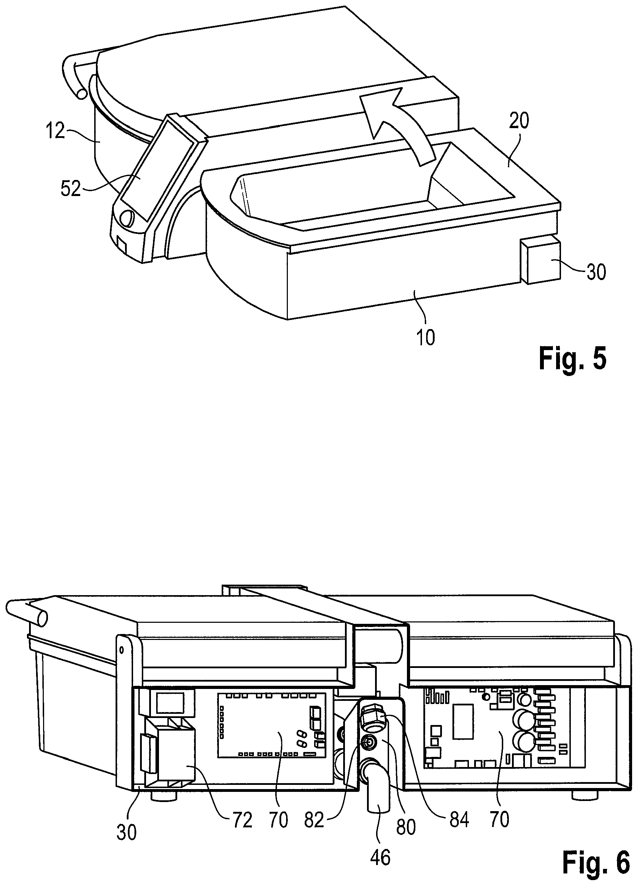

Bei der in Figur 1 dargestellten Ausführungsform endet der Mittelsteg 28 vertikal in etwa bündig mit der Oberseite des Deckels 14, 16, sodass die höchste Stelle des Gargerätes im Bereich des hinteren Endes der Deckel 14, 16 ist. Bei der Ausführungsform nach Figur 5 steht der Mittelsteg 28 gegenüber der Oberseite der Deckel 14, 16 nach oben vor, um einen Spritzschutz zu bilden.

Die Ausführungsform nach den Figuren 3 und 4 entspricht im Wesentlichen der vorhergehenden, wobei das Display 52 jedoch anders angeordnet ist. Bezüglich sämtlicher anderer Merkmale kann jedoch auf die vorhergehenden Ausführungsformen nach den Figuren 1 und 2 verwiesen werden. Neben dem Display 52 besteht noch ein weiterer Unterschied dieser Ausführungsformen darin, dass der Quersteg 30 seitlich etwas gegenüber den Tiegeln 10, 12 vorsteht und ein Halter 56 für die Lagerung der Schwenkachse 48 am zweiten Ende der Schwenkachse 48 vorhanden ist.

Bei sämtlichen Ausführungsformen liegt der hintere Rand 20 jedes Tiegels 10, 12 auf der Oberseite oder auf einem Absatz des Querstegs 30 auf, wenn der jeweilige Tiegel 10, 12 ungekippt ist. Zusätzlich kann auch noch eine Auflagefläche am Mittelsteg 28 vorhanden sein.

Die Schwenkbewegung des Tiegels 10, 12 und auch des zugeordneten Deckels 14, 16 erfolgt vorzugsweise rein mechanisch. Entsprechende Griffe 60 am Deckel 14, 16 oder am Tiegel 10, 12 sind einfach verwirklichbar. Alternativ hierzu sind die beiden Tiegel 10, 12 auch motorisch kippbar.

Die mechanische Schwenk- oder Kippbewegung kann generell durch Gasdruckfedern 62, die in Figur 1 nur symbolisch angedeutet sind, unterstützt werden.

Die Ausführungsform nach Figur 5 ist insofern unterschiedlich zu den vorherigen, als dass sich der Quersteg 30 unterhalb des hinteren Randes 20 der Tiegel 10, 12 erstreckt, sodass er von oben gesehen sogar verdeckt ist. Alternativ hierzu kann der Rand 14 von oben gesehen den Quersteg 30 auch nur teilweise überdecken. Damit lässt sich das innere Tiegelvolumen erhöhen.

Bei dieser Ausführungsform ist insbesondere die Deckellagerung von Bedeutung, hier sollten die Deckel 14, 16 möglichst weit hinten und oben gelagert werden, um ausreichend wegzuschwenken und Platz für das Kippen des Tiegels zu machen. In diesem Zusammenhang kann es sinnvoll sein, die Deckel 14, 16 etwas exzentrisch zu lagern, sodass die Achse 48 beim Hochschwenken selbst auch noch nach oben schwenkt.

Um das Gargerät möglichst kompakt auszuführen und glatte Außenflächen zu erzeugen, ist zumindest ein Teil der elektrischen Bauteile, vorzugsweise sämtliche elektrischen Bauteile, insbesondere aber sind zumindest sämtliche elektronischen Bauteile 70 im Inneren des Gestells 26 untergebracht. In Figur 6 ist zu sehen, dass die elektronischen Bauteile 70 im Bereich der Rückwand vorgesehen sind.

Auch ein Trafo 72 ist im Quersteg 30 untergebracht.

Natürlich können auch elektrische, darunter elektronische Bauteile im Inneren des Mittelstegs 28 vorgesehen sein. Elektrische Bauteile 74 wie Relais oder Ein-Aus-Schalter sind in Figur 7 dargestellt.

Gut zu erkennen ist im Schnitt nach Figur 7 auch, dass sowohl die Wasser-, Abwasser- als auch elektrische Leitungsführung im Inneren des Gestells 26 realisiert ist.

Von der Rückseite 44 aus (siehe Figur 6) erfolgen alle Energieanschlüsse. Hierzu hat die Rückseite eine in Richtung Vorderseite gezogene Anschlussnische 80, in der der Frischwasseranschluss 82, der elektrische Anschluss 84 sowie der Abwasseranschluss mit dem Stutzen 46 enden und vollständig untergebracht sind.

Die Nische 80 ist so tief, dass bei angeschlossenen Kabeln und Schläuchen diese nicht gegenüber der Rückwand 44 nach hinten vorstehen, sodass die Rückwand tatsächlich an eine Wand herangeschoben werden kann.

Figur 7 zeigt die elektrische Leitung 90, die vom Anschluss 84 ausgeht und bis zum Display 52 und zum Ein-Aus-Schalter (elektrisches Bauteil 74 an der Vorderseite) reicht. Der Frischwasseranschluss 82 führt über eine nicht komplett dargestellte Leitung zu dem Kanal 50.

Vorzugsweise ist eine Trennwand 92 (siehe Figur 7) zwischen den elektrischen Bauteilen und der elektrischen Leitungsführung und den Wasser führenden Teilen vorgesehen, sodass der Innenraum im Mittelsteg 28 in zwei Räume untergliedert wird.

Diese wie auch die übrigen Merkmale der verschiedenen Ausführungsformen der Gargeräte können beliebig miteinander kombiniert werden.

In Figur 8 ist eine weitere Möglichkeit, das Gargerät zu optimieren, dargestellt, die ebenfalls mit sämtlichen übrigen gezeigten Merkmalen der anderen Gargeräte kombiniert werden kann.

Das Gargerät hat integriert in den Mittelsteg 26 eine ausziehbare Handbrause. Die Handbrause umfasst einen Brausekopf 94 sowie einen vom Brausekopf ausgehenden Schlauch 96, der in einem Aufrollmechanismus 98 endet, welcher im Mittelsteg 26 untergebracht ist und mit dem Frischwasseranschluss 82 gekoppelt ist.

Der Brausekopf 94 (auch in Figur 3 gezeigt) ist in einer Halterung 100 aufgenommen, deren Form so auf den Brausekopf 94 abgestimmt ist, dass der Brausekopf bei eingezogener Brause eine definierte Ausrichtung hat. In dieser Ausrichtung liegt der Auslass 102 am Brausekopf 94 waagerecht oder nach unten weisend. Die Schlauchführung vom Brausekopf 94 bis zum Aufrollmechanismus 98 ist schräg aufwärts gerichtet. Damit ergibt sich ein schräg aufwärts gerichteter, definierter Frischwasserkanal.

## Patentansprüche

1. Gargerät zum Zubereiten von Speisen, mit wenigstens einem kippbar gelagerten, beheizbaren Tiegel (10, 12), einem vorzugsweise schwenkbaren Deckel (14, 16) zum Öffnen und Schließen des Tiegels (10, 12) sowie einem Auf-Tisch-Gestell (26), das den Tiegel (10, 12) trägt, wobei der Tiegel (10, 12) einen vorderen, einen hinteren sowie seitliche Ränder (18-24) hat,
wobei das Auf-Tisch-Gestell (26) am vorderen Rand (18) des Tiegels (10, 12) gestellfrei ausgeführt ist,
**dadurch gekennzeichnet, dass** der einem Tiegel (10, 12) zugeordnete Gestellabschnitt in Draufsicht L-förmig ist und längs des hinteren und eines seitlichen Randes (20, 24) verläuft oder
dass zwei nebeneinander angeordnete Tiegel (10, 12) vorhanden sind und das Auf-Tisch-Gestell (26) in Draufsicht T-förmig ausgebildet ist, mit einem zwischen den Tiegeln (10, 12) verlaufenden Mittelsteg (28) und einem längs der hinteren Ränder verlaufenden Quersteg (30).

2. Gargerät nach Anspruch 1, **dadurch gekennzeichnet, dass** das Gerät an einem zum vorderen Rand (18) angrenzenden seitlichen Rand (22) zumindest im Übergangsbereich zum vorderen Rand (18) ebenfalls gestellfrei ausgeführt ist.

3. Gargerät nach einem der vorhergehenden Ansprüche, **dadurch gekennzeichnet, dass** der Mittelsteg (28) gegenüber der Oberseite der geschlossenen Deckel (14, 16) nach oben vorsteht.

4. Gargerät nach einem der vorhergehenden Ansprüche, **dadurch gekennzeichnet, dass** im Mittelsteg (28) elektrische Bauteile (74) und/oder flüssigkeitsführende Bauteile untergebracht sind, insbesondere wobei eine Trennwand (92) zwischen Räumen innerhalb des Mittelstegs (28), in denen elektrische Bauteile (74) untergebracht sind, und Räumen, in denen flüssigkeitsführende Bauteile untergebracht sind, vorhanden ist.

5. Gargerät nach einem der vorhergehenden Ansprüche, **dadurch gekennzeichnet, dass** im Mittelsteg (28) eine frei auskragende Schwenkachse (32) für den zugeordneten Tiegel (10, 12) gelagert ist, insbesondere wobei die Schwenkachse (32) in ihrem Inneren einen von einem Tiegelboden und/oder einer Tiegelwand ausgehenden Ablaufkanal (38) bildet, der längs des Mittelstegs (28) in Richtung zum Quersteg (30) verläuft.

6. Gargerät nach einem der vorhergehenden Ansprüche, **dadurch gekennzeichnet, dass** der längs des hinteren Randes (20) verlaufende Abschnitt des Auf-Tisch-Gestells unterhalb des hinteren Randes (20) des Tiegels (10, 12) verläuft.

7. Gargerät nach einem der vorhergehenden Ansprüche, **dadurch gekennzeichnet, dass** der längs des hinteren Randes (20) verlaufende Abschnitt des Auf-Tisch-Gestells (26) in Draufsicht gegenüber dem hinteren Rand (20) des wenigstens einen Tiegels (10, 12) nach hinten nicht vorsteht.

8. Gargerät nach einem der vorhergehenden Ansprüche, **dadurch gekennzeichnet, dass** das Auf-Tisch-Gestell (26) durch zusammengesetzte Hohlkörper gebildet ist.

9. Gargerät nach einem der vorhergehenden Ansprüche, **dadurch gekennzeichnet, dass** das Auf-Tisch-Gestell (26) das feststehende Gehäuse des Gargeräts bildet.

10. Gargerät nach einem der vorhergehenden Ansprüche, **dadurch gekennzeichnet, dass** das Auf-Tisch-Gestell (26) eine Rückseite (44) mit einer in Richtung Vorderseite eingezogenen Anschlussnische (80) hat, in der zumindest ein Wasser- und/oder wenigstens ein Elektroanschluss (84, 82) endet.

11. Gargerät nach einem der vorhergehenden Ansprüche, **dadurch gekennzeichnet, dass** der Tiegel (10, 12) im nicht verschwenkten Zustand im Bereich seines hinteren Randes (20) auf dem Auf-Tisch-Gestell (26) aufliegt.

12. Gargerät nach einem der vorhergehenden Ansprüche, **dadurch gekennzeichnet, dass** der Deckel (14, 16) und/oder der wenigstens ein Tiegel (10, 12) mechanisch schwenkbar sind bzw. ist und eine die Schwenkbewegung unterstützende Gasdruckfeder (62) vorhanden ist.

13. Gargerät nach einem der vorhergehenden Ansprüche, **dadurch gekennzeichnet, dass** in dem Auf-Tisch-Gestell (26) eine ausziehbare Handbrause mit Aufrollmechanismus (98) untergebracht ist, wobei in eingefahrenem Zustand der Handbrause deren Brausekopf (94) und deren Schlauch (96) so gelagert sind, dass der durch sie definierte Kanal vom Auslass (102) im Brausekopf (96) bis zum Erreichen des Aufrollmechanismus (98) schräg aufwärts verläuft.

## Claims

1. A cooking device for preparing food, comprising at least one tiltably mounted, heatable pan (10, 12), a preferably swiveling lid (14, 16) for opening and closing the pan (10, 12), and a table-top frame (26) which carries the pan (10, 12), the pan (10, 12) having front, rear and lateral edges (18-24),
the table-top frame (26) being designed to be frame-free at the front edge (18) of the pan (10, 12),
**characterized in that** the frame section associated with a pan (10, 12) is L-shaped in a top view and extends along the rear edge and one lateral edge (20, 24), or
that two pans (10, 12) arranged side by side are provided and the table-top frame (26) is formed to be T-shaped in a top view, with a middle web (28) extending between the pans (10, 12) and a transverse web (30) extending along the rear edges.

2. The cooking device according to claim 1, **characterized in that** the device is designed to be frame-free also at a lateral edge (22) adjacent to the front edge (18) at least in the region of transition to the front edge (18).

3. The cooking device according to either of the preceding claims, **characterized in that** the middle web (28) protrudes upwards in relation to the upper side of the closed lids (14, 16).

4. The cooking device according to any of the preceding claims, **characterized in that** electrical components (74) and/or liquid-carrying components are accommodated in the middle web (28), a partition wall (92) being more particularly provided between spaces within the middle web (28) in which electrical components (74) are accommodated and spaces in which liquid-carrying components are accommodated.

5. The cooking device according to any of the preceding claims, **characterized in that** a freely projecting swiveling spindle (32) for the associated pan (10, 12) is mounted in the middle web (28), the swiveling spindle (32) more particularly forming in its interior a discharge channel (38) which starts from a bottom of the pan and/or a wall of the pan and extends along the middle web (28) towards the transverse web (30).

6. The cooking device according to any of the preceding claims, **characterized in that** the section of the table-top frame extending along the rear edge (20) extends below the rear edge (20) of the pan (10, 12).

7. The cooking device according to any of the preceding claims, **characterized in that** in a top view, the section of the table-top frame (26) extending along the rear edge (20) does not protrude to the rear in relation to the rear edge (20) of the at least one pan (10, 12).

8. The cooking device according to any of the preceding claims, **characterized in that** the table-top frame (26) is formed by hollow bodies put together.

9. The cooking device according to any of the preceding claims, **characterized in that** the table-top frame (26) forms the fixed housing of the cooking device.

10. The cooking device according to any of the preceding claims, **characterized in that** the table-top frame (26) has a rear side (44) having a connection niche (80) recessed towards the front side and in which at least a water connection and/or at least one electrical connection (84, 82) terminate(s).

11. The cooking device according to any of the preceding claims, **characterized in that** in the non-swiveled state, the pan (10, 12) rests on the table-top frame (26) in the region of its rear edge (20).

12. The cooking device according to any of the preceding claims, **characterized in that** the lid (14, 16) and/or the at least one pan (10, 12) is/are adapted to be mechanically swiveled, and a gas spring (62) assisting the swiveling motion is provided.

13. The cooking device according to any of the preceding claims, **characterized in that** a pullout rinsing hose having a retractor mechanism (98) is accommodated in the table-top frame (26), wherein in the retracted condition of the rinsing hose, the rinsing head (94) thereof and the hose (96) thereof are mounted such that the channel defined by them extends obliquely upwards from the outlet (102) in the rinsing head (96) until it reaches the retractor mechanism (98).

## Revendications

1. Appareil de cuisson pour la préparation d'aliments, présentant au moins un poêlon (10, 12) chauffant monté basculant, un couvercle (14, 16) de préférence pivotant pour l'ouverture et la fermeture du poêlon (10, 12), et un cadre sur table (26) qui porte le poêlon (10, 12), le poêlon (10, 12) présentant un bord avant, un bord arrière et des bords latéraux (18-24),
le cadre sur table (26) étant réalisé sans cadre au niveau du bord avant (18) du poêlon (10, 12),
**caractérisé en ce qu'**un tronçon de cadre associé à un poêlon (10, 12) présente la forme d'un L dans une vue de dessus et s'étend le long du bord arrière d'un bord latéral (20, 24), ou
**en ce que** deux poêlons (10, 12) agencés l'un à côté de l'autre sont présents et **en ce que** le cadre sur table (26) est réalisé en forme de T dans une vue de dessus, avec une barrette médiane (28) qui s'étend entre les poêlons (10, 12) et une barrette transversale (30) qui s'étend le long des bords arrière.

2. Appareil de cuisson selon la revendication 1, **caractérisé en ce que** l'appareil est également réalisé sans cadre au niveau d'un bord latéral (22) adjacent au bord avant (18) au moins dans la zone de transition vers le bord avant (18).

3. Appareil de cuisson selon l'une des revendications précédentes, **caractérisé en ce que** la barrette médiane (28) fait saillie vers le haut par rapport à la face supérieure des couvercles fermés (14, 16).

4. Appareil de cuisson selon l'une des revendications précédentes, **caractérisé en ce que** des composants électriques (74) et/ou des composants conducteurs de liquide sont logés dans la barrette médiane (28), une paroi de séparation (92) étant en particulier présente entre des espaces à l'intérieur de la barrette médiane (28) dans lesquels des composants électriques (74) sont logés, et des espaces dans lesquels des composants conducteurs de liquide sont logés.

5. Appareil de cuisson selon l'une des revendications précédentes, **caractérisé en ce qu'**un axe de pivotement (32) librement en porte-à-faux pour le poêlon associé (10, 12) est logé dans la barrette médiane (28), l'axe de pivotement (32) formant en particulier dans son intérieur un canal d'évacuation (38) qui part d'un fond de poêlon et/ou d'une paroi de poêlon et qui s'étend le long de la barrette médiane (28) en direction de la barrette transversale (30).

6. Appareil de cuisson selon l'une des revendications précédentes, **caractérisé en ce que** le tronçon du cadre sur table qui s'étend le long du bord arrière (20) s'étend au-dessous du bord arrière (20) du poêlon (10, 12).

7. Appareil de cuisson selon l'une des revendications précédentes, **caractérisé en ce que**, dans une vue de dessus, le tronçon du cadre sur table (26) qui s'étend le long du bord arrière (20) ne fait pas saillie vers l'arrière par rapport au bord arrière (20) dudit au moins un poêlon (10, 12).

8. Appareil de cuisson selon l'une des revendications précédentes, **caractérisé en ce que** le cadre sur table (26) est formé par des corps creux assemblés.

9. Appareil de cuisson selon l'une des revendications précédentes, **caractérisé en ce que** le cadre sur table (26) forme le boîtier stationnaire de l'appareil de cuisson.

10. Appareil de cuisson selon l'une des revendications précédentes, **caractérisé en ce que** le cadre sur table (26) comporte une face arrière (44) qui présente une niche de raccord (80) en retrait en direction de la face avant, dans laquelle au moins un raccord d'eau et/ou au moins un raccord électrique (84, 82) se termine.

11. Appareil de cuisson selon l'une des revendications précédentes, **caractérisé en ce qu'**à l'état non pivoté, le poêlon (10, 12) repose sur le cadre sur table (26) dans la zone de son bord arrière (20).

12. Appareil de cuisson selon l'une des revendications précédentes, **caractérisé en ce que** le couvercle (14, 16) et/ou ledit au moins un poêlon (10, 12) est/sont apte(s) à être pivoté(s) mécaniquement et **en ce qu'**un ressort à pression de gaz (62) est présent lequel soutient un mouvement de pivotement.

13. Appareil de cuisson selon l'une des revendications précédentes, **caractérisé en ce qu'**une douchette extractible présentant un mécanisme d'enroulement (98) est logée dans le cadre sur table (26), la tête de douchette (94) et le tuyau (96) de la douchette, à l'état rentré de celle-ci, étant logés de manière à ce que le canal qu'ils définissent s'étende en oblique vers le haut depuis la sortie (102) dans la tête de douchette (96) jusqu'à l'arrivée au mécanisme d'enroulement (98).
